# FASCICULE DE BREVET EUROPEEN

(11) **EP 1 172 939 B1**
(45) Date de publication et mention de la délivrance du brevet: **27.04.2011**
(21) Numéro de dépôt: 01401757.8
(22) Date de dépôt: 02.07.2001
(51) Int. Cl.: H04B 1/38

(54) **appareil electronique portable muni d'un module bluetooth integré**
Elektronische tragbare vorrichtung mit integriertem bluetooth modul
Electronic portable apparatus having an integrated bluetooth module

(30) Priorité: 10.07.2000 FR 0008965
(43) Date de publication de la demande: 16.01.2002
(73) Titulaire: IPG Electronics 504 Limited, St Peter Port Guernsey GY1 3QL (GB)
(72) Inventeur: Martinez, Eric, 78500 Sartrouville (FR); Petit, Roger, 78500 Sartrouville (FR)
(74) Mandataire: Talbot-Ponsonby, Clare Josephine

(56) Documents cités:
- EP-A- 0 665 655
- WO-A-94/19873

## Description

La présente invention est relative au domaine des appareils électroniques portables et concerne plus particulièrement un appareil électronique portable muni d'un dispositif intégré de radiocommunications comprenant une antenne pour l'émission et/ou la réception d'ondes électromagnétiques.

Jusqu'à présent, les téléphones portables étaient destinés uniquement à servir de terminal de télécommunications dans un réseau de télécommunications mobiles, de même que les assistants numériques personnels étaient eux destinés à gérer des données personnelles à leurs utilisateurs en leur proposant agendas, traitements de texte et tableaux de calculs, transmissions de messages électroniques, etc.

Grâce à une évolution technologique tendant à rendre compatible la communication entre des appareils électroniques de types différents, un téléphone portable peut désormais communiquer avec par exemple un ordinateur de bureau. Ceci est notamment rendu possible via la technologie sans fil dénommée "Bluetooth". Ainsi, au sein d'un premier appareil, une puce électronique dédiée mettant en oeuvre les spécifications de cette technologie permet d'assurer, via une antenne propre, une communication dans une bande de fréquence spécifique compatible avec un autre appareil équipé également d'une telle puce. Il est courant d'appeler module Bluetooth le bloc comprenant la puce et son antenne de transmission.

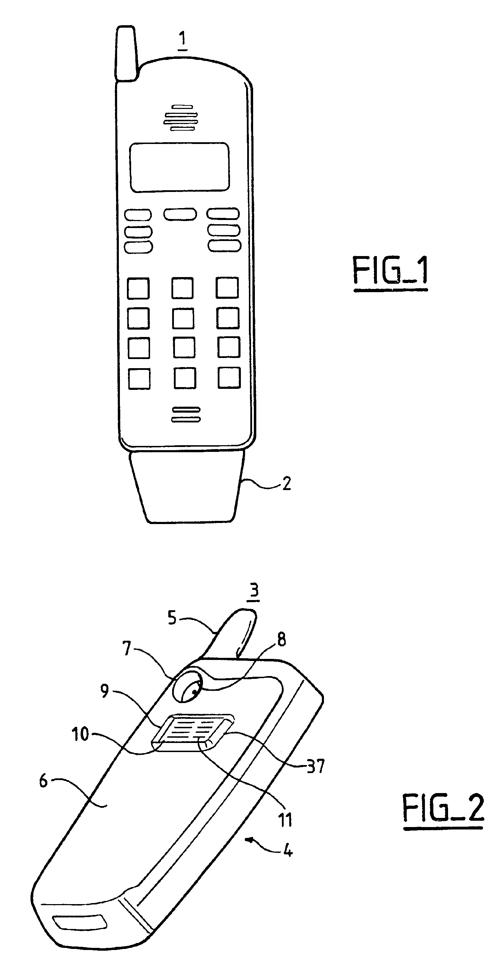

Il est connu de l'état de la technique, illustré sur la figure 1, un téléphone portable 1 dont le module Bluetooth 2 est rapporté au pied du téléphone en verrouillant le module sur un connecteur adapté du téléphone. Cependant, cette solution "en kit" a pour principal inconvénient de rallonger le téléphone dans sa longueur lorsque le module lui est rapporté.

Pour pallier ce problème, les équipes de recherche et de développement de la Demanderesse ont équipé des téléphones portables de modules Bluetooth implantés dans le boîtier du téléphone, et plus particulièrement dans le compartiment de la batterie. Ainsi, l'encombrement dû à l'adjonction du module est minimisé puisqu'il occupe un volume partiellement inoccupé jusqu'à présent dans le téléphone.

Cependant, le compartiment de la batterie est généralement disposé au dos du téléphone par lequel l'utilisateur est destiné à le saisir. Les inventeurs ont constaté que, du fait du vis-à-vis de l'antenne du module Bluetooth par rapport au dos du téléphone, la présence en utilisation de la main de l'utilisateur intercepte une partie du rayonnement de l'antenne qui pourrait être utile pour la qualité de la liaison radio.

La partie de rayonnement électromagnétique absorbée par la main de l'utilisateur est perdue pour la finalité du module Bluetooth, qui est d'assurer une transmission radio efficace. Ce rayonnement perdu pour la communication est dissipé sous forme thermique.

< - > = Le Document WO 94/19873 décrit diverses solutions pour intégrer une antenne de radiomessagerie dans un téléphone portable avec un minimum d'encombrement, et sans modifier l'apparence extérieure du téléphone.

L'invention vise à éviter ce problème de réduction de l'efficacité ou du rendement de l'antenne d'un module intégré à un dispositif électronique portable dû à l'affaiblissement provoqué par la main de l'utilisateur.

A cet effet, l'invention a pour objet un appareil électronique portable comprenant un dispositif émetteur et/ou récepteur de signaux radioélectriques intégré à l'appareil, le dispositif comportant une antenne pour l'émission et/ou la réception de ces signaux radioélectriques, l'antenne étant en regard d'au moins une portion d'une face extérieure dudit appareil destinée à la préhension par un utilisateur, ledit appareil étant caractérisé en ce qu'il comprend des moyens pour créer une différence tactile selon ladite portion de manière à gêner la préhension par l'utilisateur sur cette portion, assurant ainsi à l'antenne un rayonnement affranchi d'une perturbation due à la présence de la main de l'utilisateur sur la portion.

Ainsi, en contraignant l'utilisateur à ne pas saisir l'appareil par la portion de la face en regard de l'antenne du dispositif intégré, l'invention permet d'éviter l'affaiblissement du signal émis provoqué par la main de l'utilisateur.

Selon un mode de réalisation, lesdits moyens sont prévus sur ladite portion.

Selon un mode de réalisation, lesdits moyens remplissent leur fonction par la forme qui leur est donnée n'épousant pas la conformation de la main de l'utilisateur.

Selon un mode de réalisation, lesdits moyens comprennent une discontinuité dans la planéité de ladite face extérieure, cette discontinuité étant formée sur le pourtour de la portion.

Selon un mode de réalisation, les moyens sont conformés en une protubérance.

Selon un mode de réalisation, lesdits moyens comprennent au moins un élément du groupe {rugosités ; partie saillante ; surface granuleuse}.

Selon un mode de réalisation, lesdits moyens sont marqués par une indication d'avertissement rappelant la présence dudit dispositif. Ainsi l'utilisateur averti de la présence d'un dispositif comprenant une antenne selon l'invention sera enclin à saisir le téléphone en évitant la portion de manière à assurer un rayonnement optimal de cette antenne.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- la figure 1 : une vue de la face avant d'un téléphone portable de l'état de la technique muni d'un module radio rapporté en verrue, déjà décrit ;
- la figure 2 : une vue en perspective, de trois-quarts arrière, d'un téléphone portable selon un premier mode de l'invention ;
- les figures 3a et 3b : des vues en perspective, la première de trois-quarts face et la seconde de trois-quarts arrière, du compartiment batterie d'un téléphone portable selon un second mode de réalisation de l'invention ;
- la figure 4 : une vue en perspective éclatée de la figure 3a ;
- la figure 5 : une carte de circuit imprimée de la figure 4 comprenant un dispositif selon l'invention et vue suivant la vue A-A de la figure 4 ;
- la figure 6 : un schéma fonctionnel illustrant les blocs fonctionnels principaux du compartiment batterie et ses liens avec le reste du téléphone portable des figures 3a et 3b.

Dans la suite de la description, des éléments remplissant des fonctions identiques sur des figures différentes porteront des mêmes références.

En outre, l'invention est décrite dans une application aux téléphones portables pour réseaux de télécommunications mobiles. Elle s'applique bien entendu plus généralement à d'autres types d'appareils électroniques portables, du type d'un assistant personnel numérique, d'un ordinateur portable ou de poche, etc. Elle concerne également les appareils électroniques destinés à être portés en utilisation par leurs utilisateurs et équipés d'un module radio, dans le domaine de la domotique (télécommande, lecteur et/ou enregistreur de disques numériques, lecteur de données compressées selon la technologie connue MP3, etc) ou des équipements intégrés dans l'habitacle d'une automobile.

Il est illustré, sur la figure 2, une vue en perspective, de trois-quarts arrière, d'un téléphone portable 3 selon un mode de réalisation de l'invention. Le téléphone 3 comporte une face avant 4 (appelée également coque principale) présentant de façon classique un écran, des touches de sélection, un écouteur et un microphone, non représentés. Le téléphone comporte également une antenne 5 pour permettre la réception/émission de signaux radiofréquence au sein du réseau de télécommunications mobiles dans lequel il se trouve, par exemple le réseau GSM ("Global System for Mobile telecommunications" en langue anglo-saxonne).

Le téléphone 3 comprend en outre à son dos un compartiment 6 détachable de la coque principale et abritant la batterie d'accumulateurs destinée à alimenter en énergie électrique le téléphone. Un orifice 7 est agencé à proximité de l'antenne 5 présentant en son fond un connecteur RF 8 pouvant relier le circuit (non représenté) de transmission du téléphone (circuit destiné à l'émission/réception de signaux au sein du réseau mobile) à une antenne extérieure au téléphone, du type de celle d'un véhicule automobile.

Ce compartiment présente sur sa surface orientée vers l'extérieur (dite coque arrière 16) une protubérance 9 quadrangulaire dont le sommet 10 est pourvu d'une surface rugueuse comportant des stries 11. Cette protubérance crée une discontinuité dans la planéité de la surface, cette discontinuité étant formée sur le pourtour 37 de la portion. La description suivante permet de détailler la fonction de cette protubérance et le choix de sa position sur la surface du compartiment.

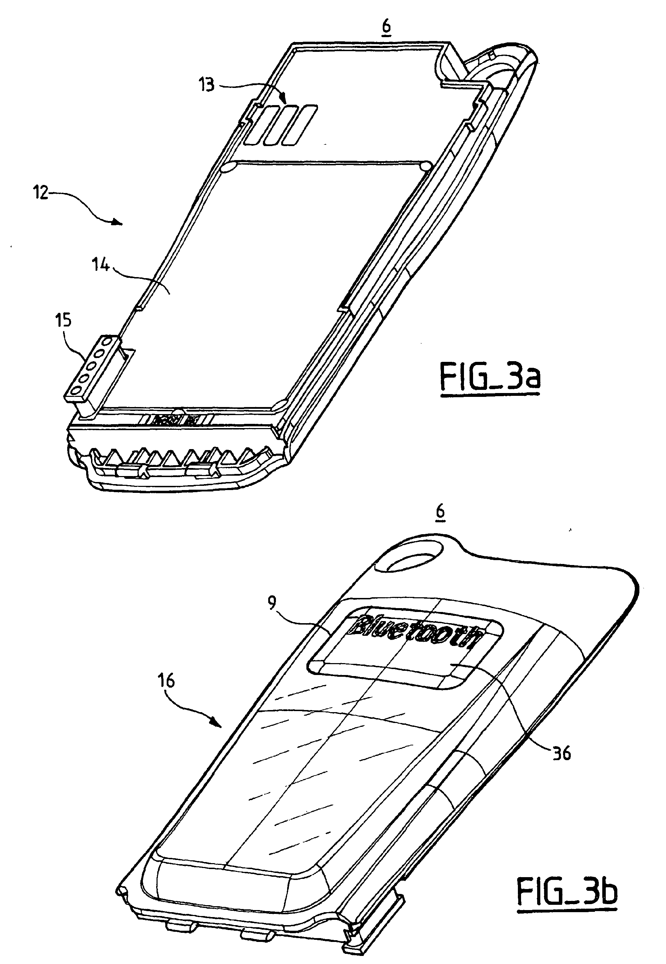

Les figures 3a et 3b représentent respectivement des vues en perspective, la première de trois-quarts face et la seconde de trois-quarts arrière, d'un compartiment batterie 6 séparé de la coque du téléphone auquel il est rapporté en fonctionnement. La figure 3a illustre la face intérieure 12 du compartiment 6. On y remarque notamment un connecteur 13 d'alimentation reliant la batterie d'accumulateurs au circuit de transmission du téléphone (partie du téléphone dédiée à la transmission au sein du réseau mobile appelée dans la suite circuit de transmission GSM) et une plaque 14 métallique de protection. Cette plaque est destinée à protéger les interférences électromagnétiques entre le circuit de transmission GSM et le dispositif selon l'invention consistant, dans le présent mode, en un module Bluetooth. Dans la suite, le dispositif selon l'invention comprenant une antenne correspond au module Bluetooth. Il est certain que tout autre dispositif muni d'une antenne intégrée et incorporé à un dispositif électronique portable est envisageable, suivant d'autres spécifications radio ou non. Un connecteur 15 composé de cinq connexions est destiné à relier le module au circuit de transmission GSM, deux connexions étant chargées de la transmission de signaux audio numérisés (une connexion pour la réception et une autre connexion pour l'émission), deux connexions pour la transmission de données (une connexion pour la réception et une autre connexion pour l'émission), et une connexion reliée à la masse.
La figure 3b illustre la coque arrière 16 du compartiment 6 présentant une protubérance 9 quadrangulaire comportant une inscription "Bluetooth" sur son sommet rappelant la présence du module associé à l'intérieur du téléphone.

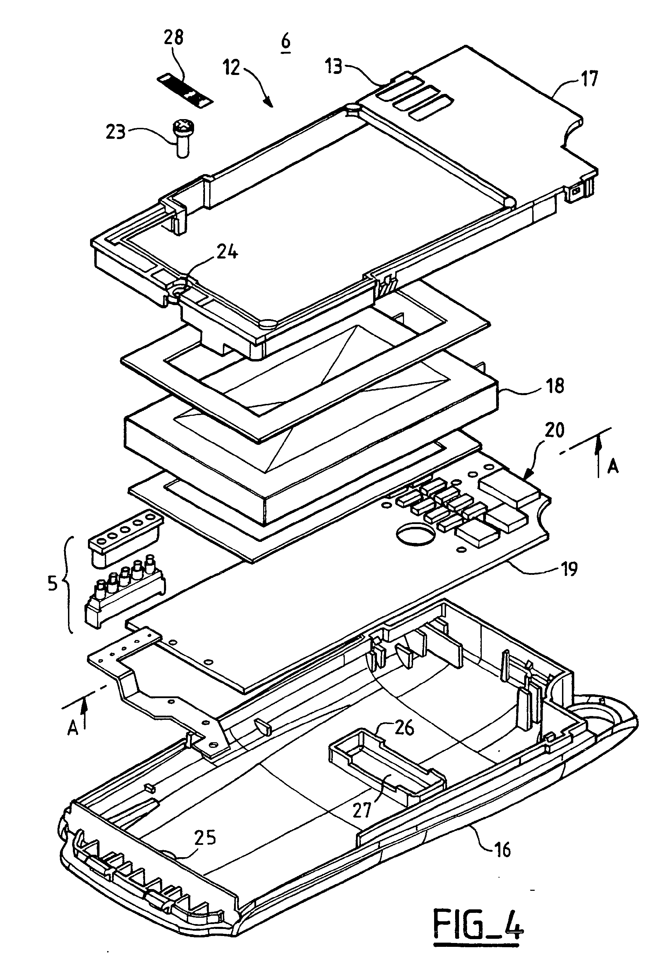

La figure 4 est une vue en perspective éclatée de la figure 3a. Elle comprend de la face intérieure 12 vers la coque extérieure 16 :
   - une planche 17 de connexion séparant le module Bluetooth se trouvant dans le compartiment 6 et le circuit de transmission GSM, et connectant la batterie d'accumulateurs 18 pour l'alimentation de ce circuit de transmission,
   - la batterie d'accumulateurs composée d'un élément Lithium-lon par exemple,
   - une carte 19 de circuit imprimé comprenant sur une première face visible sur la figure 4 orientée vers la face 12 un circuit 20 de protection composé de fusibles, transistors, ... connu en soi ayant pour rôle de couper l'alimentation en énergie électrique, provenant de la batterie 18, en direction du circuit de transmission GSM et du module Bluetooth,
   - la coque arrière 16, vue de l'intérieur.

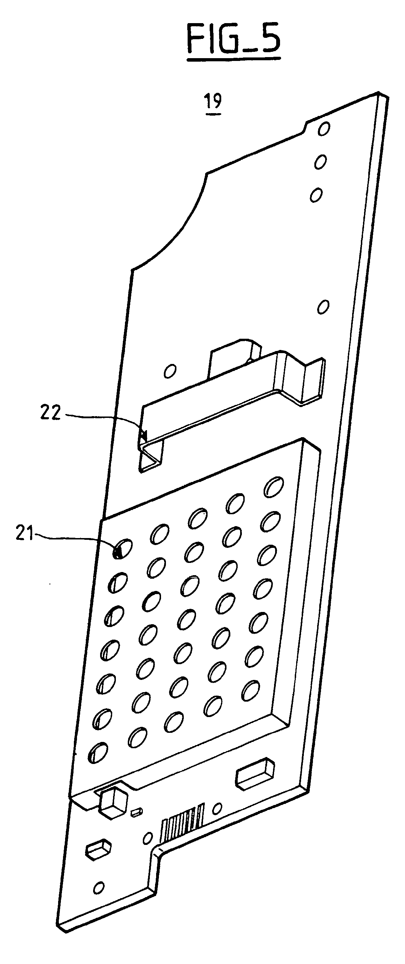

La figure 5 est une vue d'une seconde face non visible sur la figure 4 de la carte 19. Cette face comprend un blindage 21 abritant les composants du module Bluetooth (non représentés car cachés par le blindage) et une antenne 22 simple boucle dite single loop en langue anglo-saxonne, en forme de Π. Ce type d'antenne est choisi principalement pour sa sélectivité, le but étant d'assurer de bonnes performances pour la bande de fréquence de fonctionnement du système radio défini par le standard Bluetooth, tout en permettant un filtrage suffisant des fréquences liées aux transmissions GSM.

L'assemblage des différents éléments de la figure 4 pour obtenir le compartiment fini est réalisé par une vis 23 s'introduisant dans un orifice correspondant 24 de la planche 17 et se vissant dans un trou fileté 25 destiné à la recevoir. Une fois la vis vissée, un scellé 28 de garantie est apposé sur la vis de manière à empêcher tout démontage frauduleux. L'élément accumulateur 18 s'appuie sur une surface de la carte 19 complémentaire à celle sur laquelle se trouve le circuit de protection 20.

Un logement 26 plastique est agencé sur la face intérieure de la coque arrière en vue de contenir l'antenne 22 lorsque la carte 19 est ramenée sur cette face intérieure. Les faces latérales de ce logement ont pour fonction de protéger mécaniquement l'antenne 22 contre tout choc. Bien entendu, l'intégralité de ce logement doit être constitué d'une matière ne dégradant pas les performances électromagnétiques de l'antenne (en l'occurrence, le logement est fait d'une matière plastique). La surface de la base 27 de ce logement correspond, ou tout du moins est comprise dans la surface de la base 36 (illustré sur la figure 3b) de la protubérance 9. Comme précédemment mentionné, la présence d'une protubérance sur une surface destinée à la préhension gêne celle-ci. L'utilisateur a ainsi tendance à éviter la prise englobant la protubérance. Ainsi, en fonctionnement, le signal transmis par l'antenne 22 est émis/reçu principalement selon la portion de surface correspondant à la base 27. Cette portion étant comprise, sur la surface opposée, à la base de la protubérance et la présence de la protubérance incitant l'utilisateur à ne pas saisir le téléphone en recouvrant par sa main cette protubérance, le rayonnement de l'antenne 22 est bien moins perturbé par sa main.

Il est important de noter que la protubérance agencée au droit de l'antenne Bluetooth se distingue de tout effet esthétique dans la mesure où celle-ci n'épouse pas la conformation de la main de l'utilisateur. Ainsi, la protubérance a été formée dans l'unique but de gêner la préhension de l'utilisateur sur ladite portion.

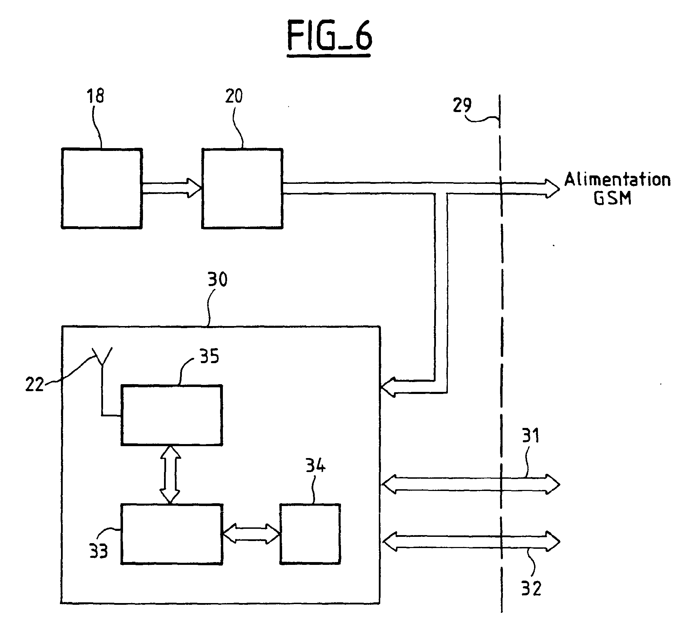

La figure 6 représente un schéma fonctionnel illustrant les blocs fonctionnels principaux du compartiment 6 et ses liens avec le circuit de transmission GSM. Le compartiment 6 est fonctionnellement illustré à gauche d'une ligne 29 en traits discontinus séparant celui-ci du reste du téléphone. Il y est illustré l'élément accumulateur 18 relié au circuit de protection 20 recevant, en fonctionnement, l'énergie électrique fournie par l'élément. Si aucune anomalie n'est détectée par ce circuit de protection, cette énergie est délivrée à d'une part l'alimentation du circuit de transmission GSM et d'autre part le module 30 Bluetooth.

Le module 30 est également relié avec le circuit de transmission GSM au moyen d'un premier lien 31 véhiculant des signaux audio numériques et un second lien 32 véhiculant des signaux de données numériques. On rappelle que les liens 31, 32 passent par le connecteur 15, chaque lien occupant deux connexions du connecteur (une pour l'émission de signaux et l'autre pour la réception de signaux).

Le module 30 comprend une puce intégrée 33 reliée à une mémoire 34 contenant la partie logicielle du module Bluetooth et à un bloc 35 d'adaptation d'antenne destiné à adapter de façon connue les signaux transmis à l'antenne 22 à laquelle il est relié. Ce bloc comprend par exemple une impédance 50 Ω en technologie imprimée.

Bien entendu, l'invention n'est pas limitée aux modes de réalisation décrits dans la présente demande. Ainsi, la protubérance 9 peut comprendre sur au moins une partie de son toit ou peut être remplacée par des stries, des parties saillantes, des rugosités, une surface granuleuse, un élément pouvant générer une impulsion électrique au contact de la peau humaine, etc.

De plus, le dispositif selon l'invention peut consister en tout module radio.

## Revendications

1. Appareil électronique portable comprenant un dispositif (30) émetteur et/ou récepteur de signaux radioélectriques intégré à l'appareil, le dispositif comportant une antenne (22) pour l'émission et/ou la réception de ces signaux radioélectriques, l'antenne étant en regard d'au moins une portion (36) d'une face extérieure dudit appareil destinée à la préhension par un utilisateur, ledit appareil étant **caractérisé en ce qu'**il comprend des moyens (9, 10, 11) pour créer une différence tactile selon ladite portion de manière à gêner la préhension par l'utilisateur sur cette portion, assurant ainsi à l'antenne un rayonnement affranchi d'une perturbation due à la présence de la main de l'utilisateur sur la portion.

2. Appareil selon la revendication 1, **caractérisé en ce que** lesdits moyens sont prévus sur ladite portion (36).

3. Appareil selon la revendication 2, **caractérisé en ce que** lesdits moyens remplissent leur fonction par la forme qui leur est donnée n'épousant pas la conformation de la main de l'utilisateur.

4. Appareil selon la revendication 3, **caractérisé en ce que** lesdits moyens comprennent une discontinuité dans la planéité de ladite face extérieure, cette discontinuité étant formée sur le pourtour (37) de la portion.

5. Appareil selon l'une des revendications 2 à 4, **caractérisé en ce que** les moyens sont conformés en une protubérance (9).

6. Appareil selon l'une des revendications 2 à 5, **caractérisé en ce que** lesdits moyens comprennent au moins un élément du groupe: rugosités (11), partie saillante or surface granuleuse.

7. Appareil selon l'une des revendications précédentes, **caractérisé en ce que** lesdits moyens sont marqués par une indication, Bluetooth, d'avertissement rappelant la présence dudit dispositif.

## Claims

1. Portable electronic apparatus comprising a device (30) that transmits and/or receives radio signals which is integrated into the apparatus, the device comprising an antenna (22) for the transmission and/or reception of said radio signals, the antenna facing at least one portion (36) of an exterior face of said apparatus intended to be gripped by a user, said apparatus being **characterized in that** it comprises means (9, 10, 11) for creating a tactile difference according to said portion so as to impede the user's gripping on this portion, thus ensuring that the antenna has radiation free of disturbance due to the presence of the user's hand on the portion.

2. Apparatus according to claim 1, **characterized in that** said means are provided on said portion (36).

3. Apparatus according to claim 2, **characterized in that** said means fulfill their function by the shape given to them, which shape does not conform to the hand of the user.

4. Apparatus according to claim 3, **characterized in that** said means comprise a discontinuity in the flatness of said exterior face, said discontinuity being formed on the perimeter (37) of the portion.

5. Apparatus according to any one of claims 2 to 4, **characterized in that** the means are formed by a protuberance (9).

6. Apparatus according to any one of claims 2 to 5, **characterized in that** said means comprise at least one element of the group {roughness (11); protruding part; granular surface}.

7. Apparatus according to any one of the preceding claims, **characterized in that** said means are marked by a notice, Bluetooth, warning of the presence of said device.

## Patentansprüche

1. Tragbares elektronisches Gerät, umfassend eine Vorrichtung (30) zum Senden und/oder Empfangen von Funksignalen, die in das Gerät integriert ist, wobei die Vorrichtung eine Antenne (22) zum Senden und/oder Empfangen dieser Funksignale umfasst, wobei sich die Antenne gegenüber mindestens einem Abschnitt (36) einer Außenseite des Geräts befindet, die zum Ergreifen durch einen Benutzer gedacht ist, wobei das Gerät **dadurch gekennzeichnet, dass** es Mittel (9, 10, 11) umfasst, um an dem Abschnitt einen fühlbaren Unterschied zu schaffen, um das Ergreifen durch den Benutzer an diesem Abschnitt zu stören, um **dadurch** für die Antenne eine Strahlung sicherzustellen, die von jeglicher Störung durch das Vorhandensein der Hand des Benutzers auf dem Abschnitt frei ist.

2. Gerät nach Anspruch 1, **dadurch gekennzeichnet, dass** die Mittel auf dem Abschnitt (36) bereitgestellt werden.

3. Gerät nach Anspruch 2, **dadurch gekennzeichnet, dass** die Mittel ihre Funktion durch die ihnen gegebene Form erfüllen, die sich nicht an die Form der Hand des Benutzers anpasst.

4. Gerät nach Anspruch 3, **dadurch gekennzeichnet, dass** die Mittel eine Diskontinuität in der Ebenheit der Außenseite umfassen, wobei diese Diskontinuität auf dem äußeren Umfang (37) des Abschnitts gebildet ist.

5. Gerät nach einem der Ansprüche 2 bis 4, **dadurch gekennzeichnet, dass** die Mittel als Ausstülpung (9) gestaltet sind.

6. Gerät nach einem der Ansprüche 2 bis 5, **dadurch gekennzeichnet, dass** die Mittel mindestens ein Element der Gruppe: Unebenheiten (11), Vorsprung oder raue Oberfläche umfassen.

7. Gerät nach einem der vorhergehenden Ansprüche, **dadurch gekennzeichnet, dass** die Mittel durch eine Warnangabe, Bluetooth, markiert sind, die an das Vorhandensein der Vorrichtung erinnert.
